# EUROPEAN PATENT SPECIFICATION

(11) **EP 4 170 681 B1**
(45) Date of publication and mention of the grant of the patent: **15.07.2026**
(21) Application number: 21306462.9
(22) Date of filing: 19.10.2021
(51) Int. Cl.: G21C 3/16, G21C 3/58, G21G 1/02

(54) **PLATE-SHAPED NUCLEAR FUEL ELEMENT AND METHOD OF MANUFACTURING THE SAME**
PLATTENFÖRMIGES KERNBRENNSTOFFELEMENT UND VERFAHREN ZU DESSEN HERSTELLUNG
ÉLÉMENT DE COMBUSTIBLE NUCLÉAIRE EN FORME DE PLAQUE ET SON PROCÉDÉ DE FABRICATION

(43) Date of publication of application: 26.04.2023
(73) Proprietor: Framatome, 92400 Courbevoie (FR)
(72) Inventor: STEPNIK, Bertrand, 26100 ROMANS-SUR-ISERE (FR); GRASSE, Michel, 26100 ROMANS-SUR-ISERE (FR)
(74) Representative: Lavoix

(56) References cited:
- US-B2- 10 847 275

## Description

The present invention relates to the technical field of nuclear fuel elements, in particular to plate-shaped nuclear fuel elements, e.g. for use as a primary target or for use as nuclear fuel for research reactors.

A plate-shaped nuclear fuel element can be put for example in a nuclear reactor to be irradiated, in order to obtain a fission product, e.g. for equipment calibration for nuclear medicine or biology use, or to provide neutrons for research applications.

A plate-shaped nuclear fuel element containing uranium may be used to recover molybdenum-99 (hereafter referred to as "Mo99"), which can in turn serve as a source of technetium-99 which is a standard beta emitter and therefore used for instance for equipment calibration, and in particular of metastable nuclear isomer of technetium-99 (Tc99m) used as radioactive tracer in nuclear medicine and biology.

It is possible to provide a plate-shaped nuclear fuel element comprising a plate-shaped core of fissile material sealed into a cladding covering the edges and the faces of the core. The fissile material may comprises uranium alloy and the cladding may be made of aluminium or aluminium alloy.

It is possible to manufacture such a plate-shaped nuclear fuel element by using a "picture-in-frame" technique. In this technique, a core made of a rectangular plate of fissile material of uniform thickness is fitted into an aperture of a frame, and cover plates are placed on the opposed faces of the frame such that the frame containing the core is sandwiched between the cover plates. This sandwich is then rolled, in particular hot-rolled. In the rolling process, the cover plates bond to the frame thus sealing the core and forming the plate-shaped nuclear fuel element.

The rolling reduces the thickness of the nuclear fuel element and increases the length of the nuclear fuel element. The rolling can give rise to a so-called "dog-bone" effect that is an increased thickness of the core at ends of the core with a corresponding reduced thickness of the cover plates.

However, it is desirable to have a minimum thickness of the cladding to prevent release of fissile material during handling and irradiation. If the cladding is locally too thin, in particular due to dog-bone effect, the nuclear fuel element has to be rebutted.

Propositions have been made to limit the dog-bone effect.

GB1094505 proposes to provide inserts between the fissile core and the cover plates at ends of the core.

US10847275B2 discloses a plate shaped isotope production target with frame and cover plates.

FR1210887 proposes to provide the fissile core as an uranium-aluminium alloy (U-Al) with the addition of one element chosen among the group consisting of silicon (Si), titanium (Ti), germanium (Ge), zirconium (Zr) and tin (Sn).

One of the aims of the invention is to propose a plate-shaped nuclear fuel element that allows reducing the risk of dog-bone effect.

To this end, the invention proposes a plate-shaped nuclear fuel element as defined in claim 1.

The frame made of a first cladding material exhibiting a higher hardness than the second cladding material of the cover plates is more resistant to deformation than the cover plates. Hence, during rolling of the nuclear fuel element, the nuclear fuel element will be less deformed in the area of the ends of the core, thus limiting apparition of the dog-bone effect.

Optional features of the nuclear fuel element are defined in claims 2 - 13.

The invention also relates to a method of manufacturing a plate-shaped nuclear fuel element as defined in claim 14.

The invention and its advantages will be better understood upon reading the following description given solely by way of non-limiting example and made with reference to the appended drawings, in which:
- Figure 1 is an front view of a plate-shaped nuclear fuel element;
- Figure 2 is a cross-sectional view of the nuclear fuel element along II - II on Figure 1;
- Figures 3 and 4 illustrate sealing of the core of the nuclear fuel element shown in Figures 1 and 2 into a cladding;
- Figure 5 and 6 illustrate cross-sectional views of nuclear fuel elements taken with an optical microscope.

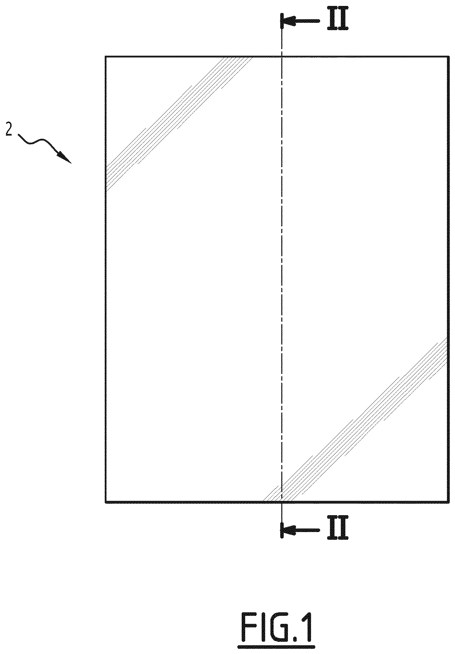

The nuclear fuel element 2 illustrated on Figure 1 is for example intended to be used as a primary target in a nuclear reactor or as a nuclear fuel for a research nuclear reactor in order to obtain neutrons.

The nuclear fuel element 2 is plate-shaped. The nuclear fuel element has for example a length of approx. 150 mm for a primary target and up to approx. 1000 mm for a nuclear fuel for research reactor, a width of e.g. 40 to 90 mm, and a thickness of approx. 1 to 3 mm. In view of obtaining a cylindrical nuclear fuel product, the plate-shaped fuel element 2 is e.g. rolled and welded on a diameter usually about 20 to 50 mm, e.g. 30 mm.

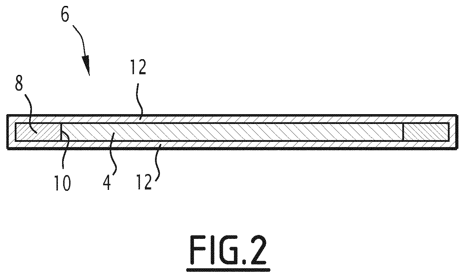

As visible on Figure 2, the nuclear fuel element 2 comprises a core 4 made of a fissile material, the core 4 being sealed in a cladding 6.

The core 4 is surrounded by the cladding 6 in a sealed manner. The cladding 6 prevents the fissile material of the core 4 from migrating outside the cladding 6. The cladding 6 also holds the fissile products generated during irradiation of the nuclear fuel element 2.

The fissile material comprises for example uranium. The uranium content of the fissile material is preferably equal or higher than 2.5 gU/cm3, preferably strictly higher than 4.8 gU/cm3. The uranium content of the core material is for example equal or less than 6.5 gU/cm3, in particular equal or less than 5.3 gU/cm3.

The uranium contained in the fissile material is for example Low Enriched Uranium (LEU). By LEU, it is meant that the proportion of isotope U₂₃₅ in the uranium is below 20 wt%, for example around 19.75 wt%.

The fissile material contains for example an uranium alloy, in particular an uranium alloy chosen among the group consisting of uranium-silicon alloy, uranium-molybdenum alloy, uranium-aluminium alloy and uranium-zirconium alloy, or a mixture thereof.

In a specific embodiment, the fissile material contains one single uranium alloy, in particular an uranium alloy chosen among the group consisting of uranium-silicon alloy, uranium-molybdenum alloy, uranium-aluminium alloy and uranium-zirconium alloy,

In a preferred embodiment, the uranium contained in the fissile material of the core 4 is provided as U₃Si₂.

The cladding 6 comprises a frame 8 having an aperture 10 receiving the core 4 and a two cover plates 12 placed on the opposed faces of the frame 8 such that the frame 8 and the core 4 received in the central aperture 10 are sandwiched between the cover plates 12.

The frame 8 is made in a first cladding material and the cover plates 12 are made of a second cladding material different from the first cladding material.

The first cladding material has a hardness that is strictly higher than the hardness of the second cladding material and, preferably, strictly lower than the hardness of the core 4 (i.e. the hardness of the fissile material).

As it will be explained below, a method for manufacturing the nuclear fuel element 2 may comprise a hot-rolling performed at a temperature comprised for example between 300°C and 600°C, in particular between 350°C and 450°C.

In the temperature range comprised between 300°C and 600°C, in particular in the temperature range comprised temperature 350°C and 450°C, the first cladding material has for example a Vickers hardness (HV) comprised between 40 and 70 HV, the second cladding material has for example a Vickers hardness comprised between 30 and 60 HV and/or the core 4 has for example a Vickers hardness comprised between 50 and 100 HV.

As it will be explained below, a method for manufacturing the nuclear fuel element 2 may comprise a cold-rolling performed at room temperature.

At room temperature, the first cladding material has for example a Vickers hardness (HV) comprised between 50 and 100 HV, the second cladding material has for example a Vickers hardness comprised between 30 and 70 HV and/or the core 4 has for example a Vickers hardness equal to or greater than 100 HV.

The first cladding material and the second cladding material are for example metallic materials.

Each of the first cladding material and the second cladding material may be any type of metallic materials generally used in nuclear reactors, i.e. an aluminium alloy, such as EN AW-1050A, EN AW-6061, EN AW-5754, EN AW-5083, EN AW-5019 or AlFeNi, a zirconium alloy such as Zircaloy-2, Zircaloy-4 or Zr-Nb alloy, a Ni-based alloy such as Alloy 600, or stainless steel such as AISI 304L or AISI 316L.

The first cladding material is for example an aluminium-magnesium alloy (Al-Mg) in particular EN AW-5083, also known as AG4, or EN AW-5019, also known as AG5.

The second cladding material is for example an aluminium-magnesium alloy, in particular EN AW-5754, also known as AG3, comprising for example about 3 wt% of magnesium.

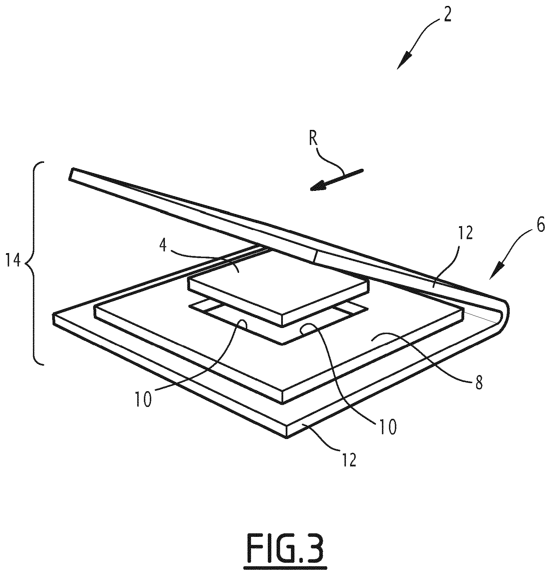

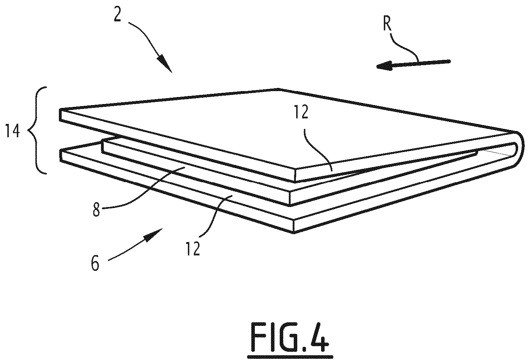

As illustrated on Figures 3 and 4, a method of manufacturing the nuclear fuel element 2 comprises the steps of:
- providing the core 4, the frame 8 and the cover plates 12,
- inserting the core 4 into the aperture 10 of the frame 8,
- placing the cover plates 12 to sandwich the frame 8 containing the core 4 with the cover plates 12 (see Figure 4), and
- rolling the sandwich formed by the core 4 and the frame 8 received between the cover plates 12 such that the cover plates 12 are bonded to the frame 8, the core 4 being sealed into the cladding 6 defined by the frame 8 and the cover plates 12 (see arrow R on Figure 4).

In a first substep, uranium and each other component of the uranium alloy of the fissile material are melted in a furnace, for example an arc furnace, an induction furnace or a resistance furnace. If any, the above-mentioned additional element(s) may be added to the melt in this first substep.

In a second substep, the melt is poured into a mould in order to form an ingot.

In a third substep, the ingot is grinded in order to obtain a uranium alloy powder. Advantageously the average size of the powder particles is less than 100µm, for example between 40 µm and 70 µm. For determining the powder particle size, laser granulometry can advantageously be used, in accordance with standard NF ISO 13320.

In a fourth substep, the powder is compacted to obtain a compact, for example having the shape of a parallelepiped. Advantageously, the compact has approximately the final width of the core 4 in the nuclear fuel product 1.

The porosity of the compact is advantageously determined by weighing the compact in air, then in water. During the latter measurement, the compact is completely immersed in water, with no air bubbles present on the suspension mechanism or on the compact. The porosity can then be calculated, knowing the theoretical density of the fissile material.

As an alternative, to shorten treatment duration and/or reduce the quantity of residual porosities, the sintering substep can be performed under high pressure, advantageously between 200 and 1000 bars, and at a temperature comprised between 400°C and 900°C.

As an alternative to the fourth and fifth substeps, the powder may be cold-sprayed on a surface, preferably a surface of the cladding 6, advantageously at a temperature comprised between 300 and 500°C. Cold-spraying results in a dense and high quality deposit.

As an alternative to the second to fifth substeps, the powder may be directly cast in a mold having directly the size of the core 3, the additional elements, if any, being added in the first substep.

In view of sealing the core 4 with a cladding 6, the core 4 is placed in the central aperture 10 in a frame 8. The aperture 10 has a contour matching that of the core 4. The core 4 has for example a rectangular contour. The frame 8 extends along the sides of the core 4.

The frame 8 is preferably made integrally in one continuous single piece of material, e.g. by punching a plate to obtain the aperture 10. Alternatively, the frame 8 may comprise several frame pieces arranged around the core 4 to define a frame 8 extending along the sides of the core 4.

After placing the core 4 inside the frame 8, the cover plates 12 are placed on the opposed faces of the frame 8, in order to form a sandwich 14 comprising the frame 8 receiving the core 4 sandwiched between the two cover plates 12.

The two cover plates 12 are for example obtained by folding a sheet as shown on Figures 3 and 4. In such case, the two cover plates 12 are made integrally in one continuous single piece of material. Alternatively, the two cover plates 12 are provided separately.

In Figure 4, the cladding 6 is sealed by rolling the sandwich 14 such that the cover plates 12 are bonded to the frame 8. Each cover plate 12 is thus bonded at its periphery to the frame 8 with closing the frame 8 in a sealed manner.

The rolling is for example a hot-rolling. The hot-rolling is preferably performed at a temperature comprised between 300°C and 600°C, in particular a temperature comprised between 350 and 450°C.

The rolling is preferably performed along one rolling direction R, with one or several passe(s) along this rolling direction R.

The rolling step brings the core 4 to its final thickness and size and ensures a proper sealing of the core 4 inside the cladding 6 formed by the frame 8 and the upper and lower plates 12.

Optionally, the rolling step includes cold-rolling of the nuclear fuel element 2 performed after hot-rolling. Cold-rolling is performed at a temperature that is strictly lower than the temperature during hot-rolling. Cold-rolling is performed preferably at room temperature. Cold-rolling is performed e.g. to adjust the thickness and the length of the core 4.

Optionally, the final planar dimensions of the nuclear fuel element 2 are adjusted by cutting the edges of the nuclear fuel element 2. The cutting by any cutting technique such as press cutting, water cutting, laser cutting...

Optionally, the final thickness of the nuclear fuel element 2 is adjusted for example by machining, chemical etching...

Optionally, the nuclear fuel element 2 is submitted to a chemical cleaning according to known processes. Chemial cleaning is performed e.g. to degrease the nuclear fuel element.

Upon rolling the sandwich 14 in the rolling direction R, waves tends to form in the core 4 and to propagate towards the edges of the core 4 along the corresponding sides of the frame 8.

The apparition of a wave increases the risk of occurrence of a "dog-bone" effect with at least one of the cladding covers 12 being too thin in register with the wave, whereby the nuclear fuel element 2 has to be rebutted.

The size of the wave formed in the fissile material of the core 4 during rolling increases when the flow rate of the fissile material decreases and the flow rate of the fissile material decreases when the density of the fissile material increase.

Therefore, increasing the uranium content of the core 4 by increasing the density of the core 4 tends to increase the risk of occurrence of a detrimental dog-bone effect.

However, as the first cladding material of the frame 8 has a hardness that is strictly greater than the hardness of the second cladding material of the cover plates 12, the frame 8 is more resistant to deformation than the cover plates 12 and therefore tends to limit the size of a wave that is formed in the core 4 during rolling.

Besides, the first cladding material of the frame 8 having a hardness that is strictly lower than the hardness of the core 4 is less resistant to deformation than the core 4 which limits the risk or formation of a wave that is formed in the core 4 during rolling.

Hence, the frame 8 made of a first cladding material harder than that of the cover plates 12 and less hard than the core 4 allows increasing the uranium contend of the core 4 by increasing density of the core 4 with limiting the risk of occurrence of a detrimental dog-bone effect.

The properties of the nuclear fuel element 2 are important, in particular for use as a primary target in a nuclear reactor or as a nuclear fuel for a research nuclear reactor in order to obtain neutrons.

The geometry and composition of the core 4, including the fissile material and the density of the core 4, are important for neutronics. The cladding material is important for the chemistry of the primary circuit of the nuclear reactor.

The increase in uranium content of the core 4 with limitation of the risk of occurrence of a dog-bone effect can be obtained with materials (fissile material, first cladding material and second cladding material), shapes, dimensions and manufacturing techniques that are already qualified for uses in nuclear reactors.

Grinding the ingot into powder and then sintering the compact made from the powder provides a good homogeneity of the core 4 and allows reducing its porosity to a desired level, and therefore increasing its density and its uranium content.

Direct casting of the core 4 leads to a non-porous core 4.

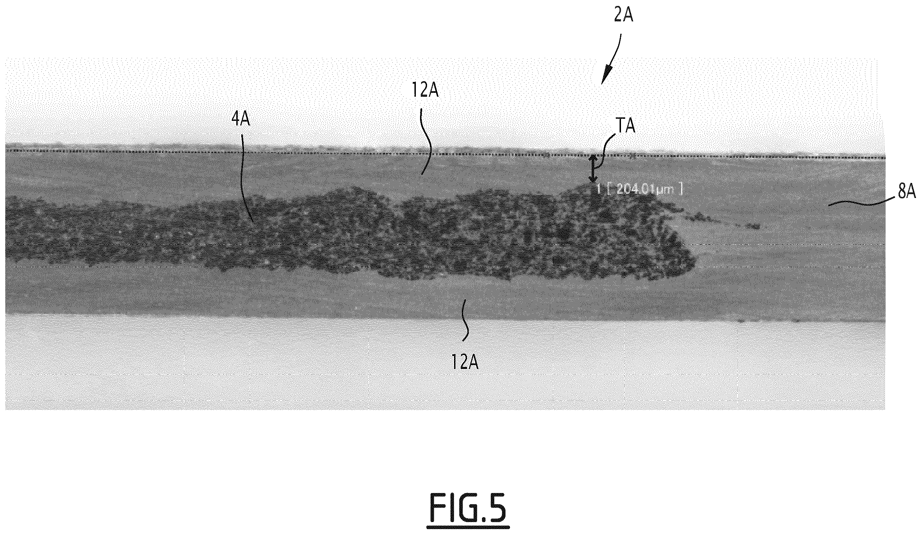

Figure 5 illustrates a view taken with an optical microscope of a cross-section of a first nuclear fuel element 2A having a core 4A made of U₃Si₂ and in which the frame 8A and the cover plates 12A are made of the same material that is AG3 whereby the frame 8A and the cover plates 12A have the same hardness.

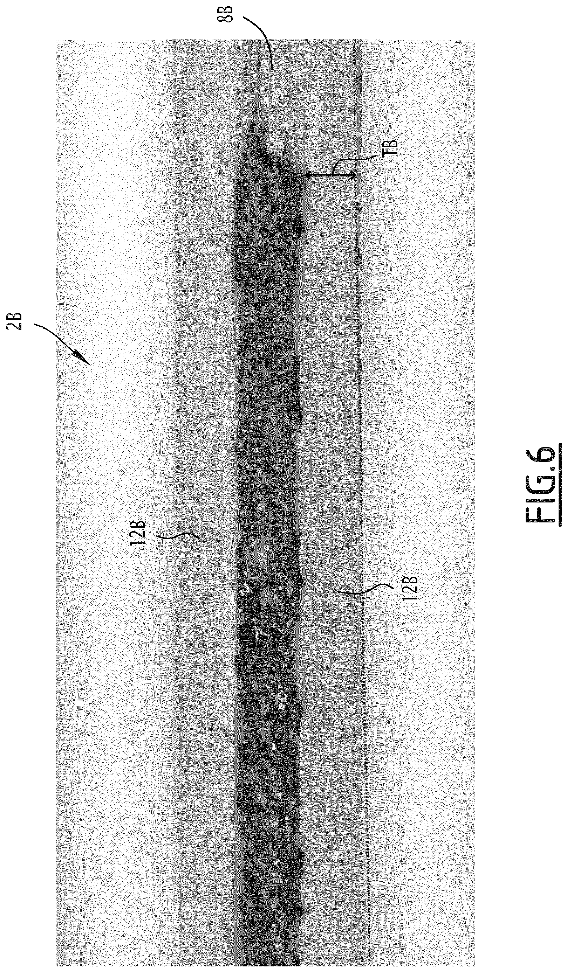

Figure 6 a view taken with an optical microscope of a cross-section of a second nuclear fuel element 2B that differs from that of Figure 5 only in that the frame 8B is made of AG5 that is harder than the cover plates 12B made of AG3.

The first nuclear fuel element 2A and the second nuclear fuel element 2B were both manufactured with the same manufacturing method operated under the same conditions and including rolling a sandwich formed of a core inserted in a frame sandwiched between two cover plates.

Figure 5 and 6 illustrate that the dog-bone effect appears on the first nuclear fuel element 2A in which the frame 8A and the cover plates 12A are made of the same material and is limited or even avoided in the second nuclear fuel element 2B in which the frame 8A and the cover plates 12A are made of different materials, the material of the frame 8B being harder than the material of the cover plates 12A.

In particular, a first minimal thickness TA of the covers plates 12A of the first nuclear fuel element 2A is strictly lower than a second minimal thickness TB of the covers plates 12B of the second nuclear fuel element 2B.

In the present case, the first minimal thickness was measured at 204 µm and the second minimal thickness was measured at 386 µm.

## Claims

1. Plate-shaped nuclear fuel element (2) comprising a core (4) made of a fissile material and a cladding (6), the cladding comprising a frame (8) defining a central aperture (10) receiving the core (4) and two cover plates (12) sandwiching the frame (8) and the core (4), wherein the frame (8) is made of a metallic first cladding material and the cover plates (12) are made of a metallic second cladding material, **characterized in that** the first cladding material has a hardness strictly greater than the hardness of the second cladding material.

2. Nuclear fuel element according to claim 1, wherein said hardness of the first cladding material is strictly lower than that of the core (4).

3. Nuclear fuel element according to claim 1 or 2, wherein the first cladding material is an aluminum alloy or a zirconium alloy.

4. Nuclear fuel element according to any one of the preceding claims, wherein the first cladding material is an aluminum-magnesium alloy.

5. Nuclear fuel element according to any one of the preceding claims, wherein the first cladding material is an AG4 or AG5 aluminum-magnesium alloy.

6. Nuclear fuel element according to any one of the preceding claims, wherein the second cladding material is an aluminum alloy or a zirconium alloy.

7. Nuclear fuel element according to any one of the preceding claims, wherein the second cladding material is an aluminum-magnesium alloy.

8. Nuclear fuel element according to any one of the preceding claims, wherein the second cladding material is an AG3 aluminum-magnesium alloy.

9. Nuclear fuel element according to any one of the preceding claims, wherein the fissile material contains at least one uranium alloy.

10. Nuclear fuel element according to any one of the preceding claims, wherein the fissile material contains an uranium-silicon alloy, an uranium-molybdenum alloy, an uranium-aluminum alloy, an uranium-zirconium alloy or a combination thereof

11. Nuclear fuel element according to any one of the preceding claims, wherein the fissile material is made of U₃Si₂.

12. Nuclear fuel element according to any one of the preceding claims, wherein a content of uranium of the fissile material is equal to or more than 2.5 gU/cm³, in particular strictly more than 4.8 gU/cm³.

13. Nuclear fuel element according to any one of the preceding claims, wherein a content of uranium of the fissile material is less than 6.5 gU/cm³, in particular less than 5.3 gU/cm³.

14. Method of manufacturing a plate-shaped nuclear fuel element comprising a core (4) made of a fissile material and a cladding (6), the cladding comprising a frame (8) defining a central aperture (10) receiving the core (4) and two cover plates (12) sandwiching the frame (8) and the core (4), wherein the frame (8) is made of a metallic first cladding material and the cover plates (12) are made of a metallic second cladding material, the first cladding material having a hardness strictly greater than the hardness of the second cladding material, the method comprising:
- providing the core (4), the frame (8) having the aperture (10) and the cover plates (12),
- inserting the core (4) into the aperture (10) of the frame (8),
- covering the frame (10) containing the core (4) with the two cover plates (12) such that the cover plates (12) sandwich the frame (8) and the core (4),
- rolling the sandwich such that the cover plates (12) are bonded to the frame (8), the core (4) being sealed into the cladding (6) defined by the frame (8) and the cover plates (12).

## Patentansprüche

1. Plattenförmiges Kernbrennstoffelement (2), umfassend einen Kern (4), der aus einem spaltbaren Material hergestellt ist, und eine Ummantelung (6), wobei die Ummantelung einen Rahmen (8), der eine zentrale Öffnung (10) definiert, die den Kern (4) aufnimmt, und zwei Deckplatten (12) umfasst, die den Rahmen (8) und den Kern (4) sandwichartig einschließen, wobei der Rahmen (8) aus einem metallischen ersten Ummantelungsmaterial hergestellt ist und die Deckplatten (12) aus einem metallischen zweiten Ummantelungsmaterial hergestellt sind, **dadurch gekennzeichnet, dass** das erste Ummantelungsmaterial eine Härte aufweist, die strikt größer ist als die Härte des zweiten Ummantelungsmaterials.

2. Kernbrennstoffelement nach Anspruch 1, wobei die Härte des ersten Ummantelungsmaterials strikt niedriger ist als diejenige des Kerns (4).

3. Kernbrennstoffelement nach Anspruch 1 oder 2, wobei das erste Ummantelungsmaterial eine Aluminiumlegierung oder eine Zirconiumlegierung ist.

4. Kernbrennstoffelement nach einem der vorhergehenden Ansprüche, wobei das erste Ummantelungsmaterial eine Aluminium-Magnesium-Legierung ist.

5. Kernbrennstoffelement nach einem der vorhergehenden Ansprüche, wobei das erste Ummantelungsmaterial eine AG4- oder AG5-Aluminium-Magnesium-Legierung ist.

6. Kernbrennstoffelement nach einem der vorhergehenden Ansprüche, wobei das zweite Ummantelungsmaterial eine Aluminiumlegierung oder eine Zirconiumlegierung ist.

7. Kernbrennstoffelement nach einem der vorhergehenden Ansprüche, wobei das zweite Ummantelungsmaterial eine Aluminium-Magnesium-Legierung ist.

8. Kernbrennstoffelement nach einem der vorhergehenden Ansprüche, wobei das zweite Ummantelungsmaterial eine AG3-Aluminium-Magnesium-Legierung ist.

9. Kernbrennstoffelement nach einem der vorhergehenden Ansprüche, wobei das spaltbare Material mindestens eine Uranlegierung enthält.

10. Kernbrennstoffelement nach einem der vorhergehenden Ansprüche, wobei das spaltbare Material eine Uran-Silicium-Legierung, eine Uran-Molybdän-Legierung, eine Uran-Aluminium-Legierung, eine Uran-Zirconium-Legierung oder eine Kombination davon enthält

11. Kernbrennstoffelement nach einem der vorhergehenden Ansprüche, wobei das spaltbare Material aus U3Si2 hergestellt ist.

12. Kernbrennstoffelement nach einem der vorhergehenden Ansprüche, wobei ein Urangehalt des spaltbaren Materials gleich oder größer als 2,5 gU/cm3 ist, insbesondere strikt mehr als 4,8 gU/cm3.

13. Kernbrennstoffelement nach einem der vorhergehenden Ansprüche, wobei ein Urangehalt des spaltbaren Materials weniger als 6,5 gU/cm3 ist, insbesondere weniger als 5,3 gU/cm3.

14. Verfahren zur Herstellung eines plattenförmigen Kernbrennstoffelements, umfassend einen Kern (4), der aus einem spaltbaren Material hergestellt ist, und eine Ummantelung (6), wobei die Ummantelung einen Rahmen (8), der eine zentrale Öffnung (10) definiert, die den Kern (4) aufnimmt, und zwei Deckplatten (12) umfasst, die den Rahmen (8) und den Kern (4) sandwichartig einschließen, wobei der Rahmen (8) aus einem metallischen ersten Ummantelungsmaterial hergestellt ist und die Deckplatten (12) aus einem metallischen zweiten Ummantelungsmaterial hergestellt sind, wobei das erste Ummantelungsmaterial eine Härte aufweist, die strikt größer ist als die Härte des zweiten Ummantelungsmaterials, wobei das Verfahren umfasst:
- Bereitstellen des Kerns (4), des Rahmens (8), der die Öffnung (10) aufweist, und der Deckplatten (12),
- Einsetzen des Kerns (4) in die Öffnung (10) des Rahmens (8),
- Bedecken des Rahmens (10), der den Kern (4) enthält, mit den zwei Deckplatten (12), derart, dass die Deckplatten (12) den Rahmen (8) und den Kern (4) sandwichartig einschließen,
- Walzen des Sandwichs, derart, dass die Deckplatten (12) mit dem Rahmen (8) verbunden werden, wobei der Kern (4) in der Ummantelung (6) eingeschlossen wird, die durch den Rahmen (8) und die Deckplatten (12) definiert ist.

## Revendications

1. Élément de combustible nucléaire en forme de plaque (2) comprenant un cœur (4) constitué d'un matériau fissile et un gainage (6), le gainage comprenant un cadre (8) définissant une ouverture centrale (10) recevant le cœur (4) et deux plaques de couverture (12) prenant en sandwich le cadre (8) et le cœur (4), dans lequel le cadre (8) est constitué d'un premier matériau de gainage métallique et les plaques de couverture (12) sont constituées d'un deuxième matériau de gainage métallique, **caractérisé en ce que** le premier matériau de gainage présente une dureté strictement supérieure à la dureté du deuxième matériau de gainage.

2. Élément de combustible nucléaire selon la revendication 1, dans lequel ladite dureté du premier matériau de gainage est strictement inférieure à celle du cœur (4).

3. Élément de combustible nucléaire selon la revendication 1 ou 2, dans lequel le premier matériau de gainage est un alliage d'aluminium ou un alliage de zirconium.

4. Élément de combustible nucléaire selon l'une quelconque des revendications précédentes, dans lequel le premier matériau de gainage est un alliage aluminium-magnésium.

5. Élément de combustible nucléaire selon l'une quelconque des revendications précédentes, dans lequel le premier matériau de gainage est un alliage aluminium-magnésium AG4 ou AG5.

6. Élément de combustible nucléaire selon l'une quelconque des revendications précédentes, dans lequel le deuxième matériau de gainage est un alliage d'aluminium ou un alliage de zirconium.

7. Élément de combustible nucléaire selon l'une quelconque des revendications précédentes, dans lequel le deuxième matériau de gainage est un alliage aluminium-magnésium.

8. Élément de combustible nucléaire selon l'une quelconque des revendications précédentes, dans lequel le deuxième matériau de gainage est un alliage aluminium-magnésium AG3.

9. Élément de combustible nucléaire selon l'une quelconque des revendications précédentes, dans lequel le matériau fissile contient au moins un alliage d'uranium.

10. Élément de combustible nucléaire selon l'une quelconque des revendications précédentes, dans lequel le matériau fissile contient un alliage uranium-silicium, un alliage uranium-molybdène, un alliage uranium-aluminium, un alliage uranium-zirconium ou une combinaison de ceux-ci

11. Élément de combustible nucléaire selon l'une quelconque des revendications précédentes, dans lequel le matériau fissile est constitué de U₃Si₂.

12. Élément de combustible nucléaire selon l'une quelconque des revendications précédentes, dans lequel une teneur en uranium du matériau fissile est égale ou supérieure à 2,5 gU/cm3, en particulier strictement supérieure à 4,8 gU/cm3.

13. Élément de combustible nucléaire selon l'une quelconque des revendications précédentes, dans lequel une teneur en uranium du matériau fissile est inférieure à 6,5 gU/cm3, en particulier inférieure à 5,3 gU/cm3.

14. Procédé de fabrication d'un élément de combustible nucléaire en forme de plaque comprenant un cœur (4) constitué d'un matériau fissile et un gainage (6), le gainage comprenant un cadre (8) définissant une ouverture centrale (10) recevant le cœur (4) et deux plaques de couverture (12) prenant en sandwich le cadre (8) et le cœur (4), dans lequel le cadre (8) est constitué d'un premier matériau de gainage métallique et les plaques de couverture (12) sont constituées d'un deuxième matériau de gainage métallique, le premier matériau de gainage présentant une dureté strictement supérieure à la dureté du deuxième matériau de gainage, le procédé comprenant :
- la fourniture du cœur (4), du cadre (8) ayant l'ouverture (10) et des plaques de couverture (12),
- l'insertion du cœur (4) dans l'ouverture (10) du cadre (8),
- le recouvrement du cadre (10) contenant le cœur (4) avec les deux plaques de couverture (12) de sorte que les plaques de couverture (12) prennent en sandwich le cadre (8) et le cœur (4),
- le laminage du sandwich de sorte que les plaques de couverture (12) soient liées au cadre (8), le cœur (4) étant scellé dans le gainage (6) défini par le cadre (8) et les plaques de couverture (12).
